# EUROPÄISCHE PATENTANMELDUNG

(11) **EP 2 813 306 A1**
(43) Veröffentlichungstag der Anmeldung: **17.12.2014**
(21) Anmeldenummer: 14169938.9
(22) Anmeldetag: 27.05.2014
(51) Int. Cl.: B23B 31/20, B23B 31/117

(54) **Werkzeughalter, Spannzange und Verfahren zum Einspannen eines Werkzeugs in einem Werkzeughalter**

(30) Priorität: 14.06.2013 DE 102013211116; 06.02.2014 DE 102014202151
(71) Anmelder: Eugen Fahrion GmbH & Co., 73667 Kaisersbach (DE)
(72) Erfinder: Fahrion, Ulrich, 73667 Kaisersbach (DE)
(74) Vertreter: DREISS Patentanwälte PartG mbB

(57) **Zusammenfassung**

Die Erfindung betrifft einen Werkzeughalter (10), mit einer mit einem Werkzeug (12) verspannbaren Spannzange (20), mit einem Spannzangenfutter (14) zur Verbindung mit einer Werkzeugmaschine, und mit einer Spannmutter (28) zur Verbindung der Spannzange (20) mit dem Spannzangenfutter (14), wobei in einem Spannzangenkörper (24) der Spannzange (20) nutförmige Materialausnehmungen vorgesehen sind, die sich in Längsrichtung des Spannzangenkörpers (24) und ausgehend von einer offenen Mantelfläche (22) des Spannzangenkörpers (24) in radialer Richtung bis zu einer Begrenzung erstrecken.

## Beschreibung

Die Erfindung betrifft einen Werkzeughalter, mit einer mit einem Werkzeug verspannbaren Spannzange, mit einem Spannzangenfutter zur Verbindung mit einer Werkzeugmaschine, und mit einer Spannmutter zur Verbindung der Spannzange mit dem Spannzangenfutter.

Werkzeughalter, die eine Spannzange, ein Spannzangenfutter und eine Spannmutter aufweisen, dienen zum Halten von Werkzeugen wie Fräsern, Bohrern, Gewindebohrern oder dergleichen. Das Werkzeug ist dabei in eine sogenannten Spannzange eingespannt, welche durch Verschraubung der Spannmutter mit dem Spannzangenfutter mit diesem verbindbar ist.

Ein solcher Werkzeughalter ist beispielsweise aus der EP 1 616 647 B1 bekannt. Bei diesem Werkzeughalter ist eine Spannzange vorgesehen, die in radialer Richtung durchgängige Schlitze aufweist, sodass in radialer Richtung bewegliche Spannzangensegmente entstehen. Diese Beweglichkeit ermöglicht - in einem durch die sogenannte Spannüberbrückung vorgegeben Rahmen - die Aufnahme von Werkzeugen mit voneinander abweichenden Durchmessern. Darüber hinaus hat ein solcher Werkzeughalter dämpfende Eigenschaften, die für eine hohe Fertigungsgenauigkeit und für einen schonenden Eingriff des Werkzeugs in ein Werkstück vorteilhaft sind. Nachteilig ist jedoch, dass die Rundlaufgenauigkeit eines solchen Werkzeughalters begrenzt ist.

Ein weiterer Werkzeughalter ist beispielsweise aus der DE 196 38 808 B4 bekannt. Bei diesem Werkzeughalter ist eine massiv ausgebildete Spannzange vorgesehen, die als sogenannte "Schrumpfspannzange" ausgebildet ist. Eine solche Spannzange ist im Wesentlichen hohlzylindrisch ausgebildet und weist keine durch Schlitze voneinander getrennte Spannzangensegmente auf. Zur Aufnahme eines Werkzeugs weist eine solche Spannzange eine Bohrung auf, die um mehrere 1/100 mm kleiner ist als ein Nenndurchmesser des Werkzeugs. Die Schrumpfspannzange wird auf mehrere 100 °C erhitzt, um die Bohrung so aufzuweiten, dass - gegebenenfalls unterstützt durch eine Einführfase oder - zentrierung - ein Einführen eines einzuspannenden Werkzeugschafts zu ermöglichen. Nach Abkühlung auf Umgebungstemperatur ist das Werkzeug in der Schrumpfspannzange mit hoher Spannkraft verspannt. Zur Fertigmontage wird dann - unter Verwendung einer Spannmutter - die Schrumpfspannzange mit dem darin verspannten Werkzeug an einem Spannzangenfutter befestigt.

Der aus der DE 196 38 808 B4 bekannte Werkzeughalter ermöglicht unter der Voraussetzung einer hochgenauen Fertigung der Einzelteile des Werkzeughalters eine hohe Rundlaufgenauigkeit. Jedoch können schon bei kleinsten Maßabweichungen und/oder ungünstigen Einzelteilpaarungen Toleranzüberlagerungen entstehen, die einen schlechten Rundlauf und reduzierte Spannkräfte des Werkzeugs bewirken. Nachteilig ist außerdem die zeitlich und gerätetechnisch aufwändige Arbeitsvorbereitung im Rahmen des Erhitzens der Schrumpfspannzange und des Einschrumpfens des Werkzeugs in die Schrumpfspannzange. Darüber hinaus kann ein solcher Werkzeughalter keine dämpfenden Eigenschaften bereitstellen. Schließlich müssen die Schrumpfspannzangen aus besonderen Materialien hergestellt werden, welche aufwändige Härte- und Anlassverfahren durchlaufen müssen.

Hiervon ausgehend liegt der vorliegenden Erfindung die Aufgabe zugrunde, einen Werkzeughalter zu schaffen, mit welchem möglichst viele der vorstehend beschriebenen Nachteile vermieden werden.

Diese Aufgabe wird bei einem Werkzeughalter der eingangs genannten Art erfindungsgemäß dadurch gelöst, dass in einem Spannzangenkörper der Spannzange nutförmige Materialausnehmungen vorgesehen sind, die sich in Längsrichtung des Spannzangenkörpers und ausgehend von einer offenen Mantelfläche des Spannzangenkörpers in radialer Richtung bis zu einer Begrenzung erstrecken.

Die Spannzange des erfindungsgemäßen Werkzeughalters weist im Unterschied zu herkömmlich geschlitzten Spannzangen keine in radialer Richtung des Spannzangenkörpers durchgängige Schlitze auf, sondern in radialer Richtung begrenzte nutförmige Materialausnehmungen. Die Materialausnehmungen erstrecken sich vorzugsweise über die gesamte Länge des Spannzangenkörpers.

Die nutförmigen Materialausnehmungen trennen zueinander benachbarte Segmente des Spannzangenkörpers, während an die Begrenzung der Materialausnehmung angrenzendes Material des Spannzangenkörpers diese Spannzangensegmente miteinander verbindet. Auf diese Weise kann eine Spannzange bereitgestellt werden, welche eine hohe Stabilität und eine hohe Rundlaufgenauigkeit aufweist, welche jedoch eine geringfügige Relativbewegbarkeit benachbarter Spannzangensegmente ermöglicht, sodass die erfindungsgemäße Spannzange auch Dämpfungseigenschaften bereitstellen kann.

Darüber hinaus ermöglicht es die erfindungsgemäße Spannzange, ein vergleichsweise kostengünstiges Material, beispielsweise einen einfach zu härtenden und handelsüblichen Federstahl, zu verwenden. Bei Wahl dieses Materials in Verbindung mit den nutförmigen Materialausnehmungen ergeben sich elastische Eigenschaften der Spannzange, mittels welchen Fertigungstoleranzen zwischen der Spannzange und dem Spannzangenfutter ausgeglichen werden können.

Die erfindungsgemäße Geometrie des Spannzangenkörpers ermöglicht es, Schwingungen zu dämpfen, was insbesondere bei Resonanzfrequenzen vorteilhaft ist.

Vorzugsweise weist die Spannzange eine Werkzeugaufnahme auf, welche bei einer Temperatur von 20 Celsius bezogen auf eine untere Toleranzgrenze eines Werkzeugnennmaßes der Spannzange ein Untermaß hat.

Bei der erfindungsgemäßen Spannzange ist es möglich, ein Untermaß zu verwenden, welches lediglich geringfügig kleiner ist als die untere Toleranzgrenze eines Werkzeugnennmaßes. Mittels dieses geringfügigen Untermaßes ist es möglich, zueinander benachbarte und miteinander verbundene Spannzangenkörpersegmente aufzuweiten und ein Werkzeug mit der Spannzange zu fügen, sodass das Werkzeug gegen eigengewichtbedingtes Verrutschen gesichert in der Spannzange gehalten ist. Der hierfür erforderliche Aufweitvorgang des Spannzangenkörpers kann mit geringen Montagekräften oder mit einer nur geringfügigen Erwärmung (beispielsweise um nicht mehr als 100°C) erfolgen. Die anschließende Rückformung (beispielsweise durch Abkühlung des Spannzangenkörpers) bewirkt lediglich eine Anlage einer inneren Mantelfläche des Spannzangenkörpers an eine Schaftfläche des Werkzeugs. Diese Anlage genügt, um ein Werkzeug so in einer Spannzange zu fixieren, dass das Werkzeug eine gewünschte Längeneinstellung einnimmt und in diesem Zustand gelagert werden kann. Das eigentliche Verspannen der Spannzange mit der Schaftfläche des Werkzeugs erfolgt erst, nachdem die Spannzange mit Werkzeug in das Spannzangenfutter eingesetzt wurde und die Spannmutter mit dem Spannzangenfutter verschraubt wird.

Erst im Zuge dieser Verschraubung werden die geringfügig relativ zueinander bewegbaren Spannzangensegmente mit der Schaftfläche des Werkzeugs verspannt, sodass die innere Mantelfläche des Spannzangenkörpers so mit der Schaftfläche des Werkzeugs zusammenwirkt, dass für eine Werkstückbearbeitung erforderliche Spannkräfte auf das Werkzeug ausgeübt werden.

Bei einer aus dem Stand der Technik bekannten Schrumpfspannzange ist ein relativ großes Untermaß erforderlich, um auch bei Werkzeugen, welche an der unteren Toleranzgrenze liegen, ausreichend hohe Spannkräfte bereitstellen zu können. Bei einer bekannten Schrumpfspannzange werden die für eine Werkstückbearbeitung erforderlichen Spannkräfte nämlich bereits im Zuge des Aufschrumpfens der Schrumpfspannzange auf das Werkzeug erzeugt; bei der Montage der Einheit aus Schrumpfspannzange und eingeschrumpftem Werkzeug wird diese Einheit lediglich an einem Spannzangenfutter befestigt, nicht jedoch weitere Spannkräfte aufgebaut. Ein Aufbau solcher Kräfte ist bei herkömmlichen, massiven Schrumpfspannzangen auch nicht möglich, da eine solche Schrumpfspannzange ungeschlitzt ist und somit keine relativ zueinander bewegbaren Spannzangensegmente aufweist.

Der erfindungsgemäße Werkzeughalter zeichnet sich durch eine Kombination aus dämpfenden Eigenschaften, hoher Rundlaufgenauigkeit und einfacher Handhabung aus. Das für ein Fügen der Spannzange mit dem Werkzeug erforderliche Aufweiten der Spannzange kann mit einem geringen Energieeintrag erfolgen, beispielsweise mittels Beaufschlagung der Spannzange mit Heißluft.

Bei dem erfindungsgemäßen Spannzangenkörper kann das Untermaß beispielsweise maximal 10 Mikrometer betragen. Zum Fügen mit einem Werkzeug, welches an der unteren Toleranzgrenze liegt, muss die Spannzange dann lediglich um 10 µm aufgeweitet werden. Dieses Aufweitmaß erhöht sich bei einem Werkzeug, welches an der oberen Toleranzgrenze liegt, um den Toleranzbereich des Werkzeugs.

In vorteilhafter Weise ist das Profil der nutförmigen Materialausnehmungen in Längsrichtung des Spannzangenkörpers gesehen identisch. Auf diese Weise kann eine unerwünschte Verschränkung benachbarter Spannzangenkörpersegmente vermieden werden.

Es ist möglich, dass sich die Materialausnehmungen ausgehend von der offenen Mantelfläche in radialer Richtung gesehen im Querschnitt verengen, sodass im Bereich der offenen Mantelfläche ein vergleichsweise großer Bewegungsweg benachbarter Spannzangenkörpersegmente bereitgestellt werden kann.

Bei einer bevorzugten Ausführungsform ist vorgesehen, dass die Begrenzung einer Materialausnehmung durch die Wandfläche eines sich in Umfangsrichtung oder tangential zur Umfangsrichtung erstreckenden Freiraums gebildet ist. Ein solcher Freiraum unterstützt ein Verkippen benachbarter Spannzangensegmente um eine zu der Spannzangenachse parallele Achse.

Die Materialausnehmungen können radial außen angeordnet sein und sich von einer äußeren Mantelfläche des Spannzangenkörpers bis zu einer radial innen liegenden Begrenzung erstrecken.

Alternativ oder zusätzlich hierzu ist es möglich, dass radial innen angeordnete Materialausnehmungen vorgesehen sind, die sich von einer inneren Mantelfläche des Spannzangenkörpers bis zu einer radial außen liegenden Begrenzung erstrecken.

Die radial außen angeordneten und/oder die radial innen angeordneten Materialausnehmungen sind vorzugsweise regelmäßig über den Umfang des Spannzangenkörpers verteilt angeordnet. Insbesondere sind mindestens drei Materialausnehmungen vorgesehen, welche entlang des Umfangs des Spannzangenkörpers relativ zueinander um 120° versetzt angeordnet sind.

Für den Fall, dass sowohl radial außen angeordnete Materialausnehmungen als auch radial innen angeordnete Materialausnehmungen vorgesehen sind, ist es möglich, dass zumindest eine Teilmenge dieser Materialausnehmungen in Umfangsrichtung gesehen miteinander fluchten. In diesem Fall sind auf Höhe miteinander fluchtender Materialausnehmungen benachbarte Spannzangenkörpersegmente in einem sich radial erstreckenden Materialbereich miteinander verbunden, der an die jeweiligen Begrenzungen von zwei miteinander fluchtenden Materialausnehmungen grenzt. Dies führt zu einer hohen Relativbewegbarkeit benachbarter Spannzangenkörpersegmente bei gleichzeitig hoher Stabilität.

Es ist auch möglich, dass bei Verwendung sowohl radial außen angeordneter Materialausnehmungen als auch radial innen angeordneter Materialausnehmungen diese in Umfangsrichtung gesehen relativ zueinander versetzt sind. Hierdurch wird eine sehr stabile, jedoch zumindest noch geringfügig verformbare Spannzange bereitgestellt, welche besonders hohe Rundlaufgenauigkeiten aufweist und dennoch dämpfend wirkt.

Die Erfindung betrifft ferner ein Verfahren zum Einspannen eines Werkzeugs in einem Werkzeughalter, insbesondere in einem vorstehend beschriebenen Werkzeughalter, umfassend das Bereitstellen einer Spannzange, das Aufweiten einer Werkzeugaufnahme der Spannzange, das Anordnen eines Werkzeugs in der Spannzange, die Rückformung der Spannzange, das Anordnen der Spannzange mit Werkzeug an einem Spannzangenfutter, das Verschrauben einer Spannmutter mit dem Spannzangenfutter, wobei die Rückformung der Spannzange mit einer Anlage einer inneren Mantelfläche eines Spannzangenkörpers an einer Schaftfläche des Werkzeugs einhergeht, bei der das Werkzeug gegen eigengewichtbedingtes Verrutschen gesichert in der Spannzange gehalten, jedoch noch nicht verspannt ist, dass das Verschrauben der Spannmutter mit einer Verspannung der inneren Mantelfläche des Spannzangenkörpers mit der Schaftfläche des Werkzeugs einhergeht, und dass erst im Zuge der Verspannung der inneren Mantelfläche des Spannzangenkörpers mit der Schaftfläche des Werkzeugs und nicht schon bereits im Zuge der Anlage der inneren Mantelfläche des Spannzangenkörpers an die Schaftfläche des Werkzeugs für eine Werkstückbearbeitung erforderliche Spannkräfte erzeugt werden.

Die vorstehend unter Bezugnahme auf den erfindungsgemäßen Werkzeughalter beschriebenen Vorteile und Ausgestaltungen beziehen sich auch auf das erfindungsgemäße Verfahren.

Bei einer weiteren Ausführungsform der Erfindung ist vorgesehen, dass die Spannzange eine Werkzeugaufnahme aufweist, welche bei einer Temperatur von 20 Celsius bezogen auf eine untere Toleranzgrenze eines Werkzeugnennmaßes der Spannzange ein Übermaß hat. Dies ermöglicht das Einfügen eines Werkzeugschafts in die Werkzeugaufnahme bei Normtemperatur, ohne dass die Werkzeugaufnahme aufgeweitet werden muss.

Bei einer besonders vorteilhaften Ausführungsform ist vorgesehen, dass der Spannzangenkörper Spannzangensegmente aufweist, in welchen keine Materialausnehmungen vorgesehen sind, dass die Spannzangensegmente über Segmentverbindungsbereiche miteinander verbunden sind und dass die Materialausnehmungen in den Segmentverbindungsbereichen angeordnet sind. Hierdurch kann eine mechanisch stabile Spannzange geschaffen werden, welche mittels der Segmentverbindungsbereiche eine Relativbewegbarkeit von zwei benachbarten Spannzangensegmenten bereitstellt.

Eine besonders gute Bewegbarkeit benachbarter Spannzangensegmente ergibt sich, wenn in den Segmentverbindungsbereichen in Umfangsrichtung alternierend radial innen angeordnete Materialausnehmungen und radial außen angeordnete Materialausnehmungen vorgesehen sind. Unter "alternierend" ist eine Anordnung zu verstehen, bei der mindestens eine radial innen angeordnete Materialausnehmung (also beispielsweise 1 oder 2 oder 3 radial innen angeordnete Materialausnehmungen) in Umfangsrichtung im Wechsel mit mindestens einer radial außen angeordneten Materialausnehmung (also beispielsweise 1 oder 2 oder 3 radial außen angeordnete Materialausnehmungen) vorgesehen sind. Beispielsweise können in einem Segmentverbindungsbereich in Umfangsrichtung gesehen einander folgen: eine radial innen angeordnete Materialausnehmung, zwei radial außen angeordnete Materialausnehmungen, eine radial innen angeordnete Materialausnehmung.

Eine besonders gute Bewegbarkeit benachbarter Spannzangensegmente ergibt sich, wenn radial innen angeordnete Materialausnehmungen und radial außen angeordnete Materialausnehmungen in Umfangsrichtung gesehen einander überlappend angeordnet sind. Dies gilt insbesondere für den Fall, dass in den Segmentverbindungsbereichen in Umfangsrichtung alternierend radial innen angeordnete Materialausnehmungen und radial außen angeordnete Materialausnehmungen vorgesehen sind.

Besonders bevorzugt ist es, dass in einem Segmentverbindungsbereich genau drei Materialausnehmungen vorgesehen sind, wobei insbesondere eine radial außen angeordnete Materialausnehmung in Umfangsrichtung gesehen zwischen zwei radial innen angeordneten Materialausnehmungen vorgesehen ist.

Schließlich ist es vorteilhaft, wenn sich die Materialausnehmungen in Ebenen erstrecken, welche bezogen auf eine zentrale Spannzangenachse der Spannzange in radialer Richtung verlaufen. Dies ermöglicht eine gleichmäßige Verklemmung des Spannzangenkörpers der Spannzange mit einem Werkzeugschaft und verhindert ein verspannungsbedingtes Tordieren von Abschnitten der Spannzange.

Die Erfindung betrifft außerdem eine Spannzange, welche die vorstehend unter Bezugnahme auf den erfindungsgemäßen Werkzeughalter beschriebenen Merkmale aufweist.

Weitere Merkmale und Vorteile der Erfindung sind Gegenstand der nachfolgenden Beschreibung und der zeichnerischen Darstellung bevorzugter Ausführungsbeispiele.

In den Zeichnungen zeigen:
- Fig. 1: eine perspektivische Ansicht einer Ausführungsform eines Werkzeughalters mit einer Spannzange;
- Fig. 2: eine Vorderansicht der Spannzange gemäß Fig. 1;
- Fig. 3: einen in Fig. 2 mit III bezeichneten Ausschnitt in vergrößerter Darstellung;
- Fig. 4: eine Vorderansicht einer weiteren Ausführungsform einer Spannzange;
- Fig. 5: einen in Fig. 4 mit V bezeichneten Ausschnitt in vergrößerter Darstellung;
- Fig. 6: eine Vorderansicht einer weiteren Ausführungsform einer Spannzange;
- Fig. 7: einen in Fig. 6 mit VII bezeichneten Ausschnitt in vergrößerter Darstellung;
- Fig. 8: eine Vorderansicht einer weiteren Ausführungsform einer Spannzange;
- Fig. 9: einen in Fig. 8 mit IX bezeichneten Ausschnitt in vergrößerter Darstellung;
- Fig. 10: eine Seitenansicht einer Vormontagegruppe einer Ausführungsform eines Werkzeughalters und eine Ausführungsform einer Vormontageeinrichtung während einer ersten Montagephase;
- Fig. 11: eine Seitenansicht der Vormontagegruppe und der Vormontageeinrichtung gemäß Fig. 10 während einer zweiten Montagephase;
- Fig. 12: eine Seitenansicht einer Ausführungsform eines Werkzeughalters während einer abschließenden Montagephase; und
- Fig. 13: eine perspektivische Ansicht einer Ausführungsform einer Spannzange.

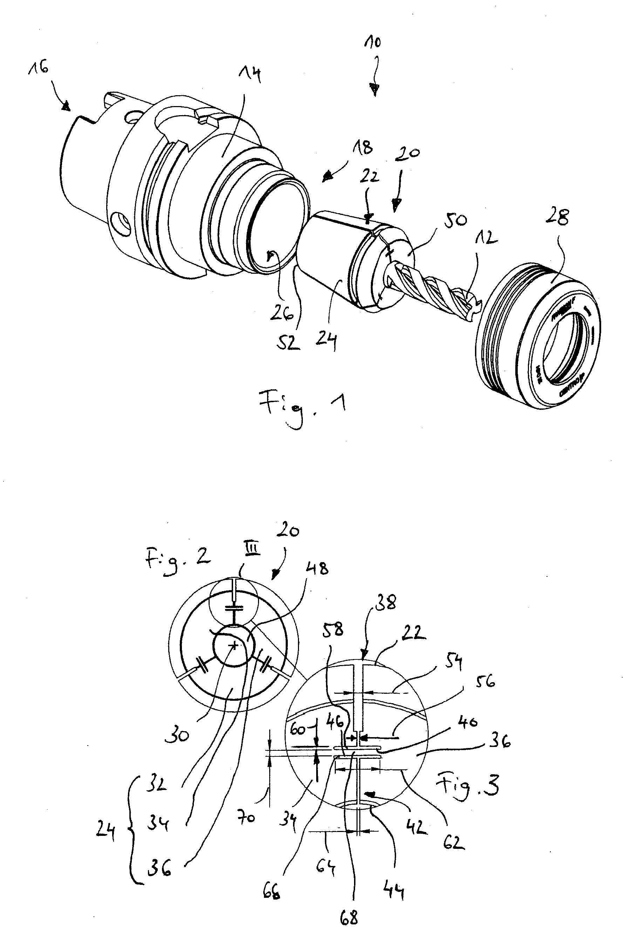

Eine Ausführungsform eines Werkzeughalters ist in Figur 1 insgesamt mit dem Bezugszeichen 10 bezeichnet. Der Werkzeughalter 10 dient zum Halten eines Werkzeugs 12, beispielsweise eines Bohrers oder eines Gewindeschneiders.

Der Werkzeughalter 10 umfasst ein Spannzangenfutter 14, welches mit einem rückwärtigen Bereich 16 in an sich bekannter Art und Weise mit einer Werkzeugmaschine verbindbar ist. Das Spannzangenfutter 14 ist in einem vorderen Bereich mit einer Spannzange 20 verbindbar. Hierbei gelangt eine vorzugsweise konische äußere Mantelfläche 22 eines Spannzangenkörpers 24 der Spannzange 20 in spannenden Eingriff mit einer konischen Spannfläche 26 des Spannzangenfutters 14. Die auf diese Art und Weise auf den Spannzangenkörper 24 ausgeübten Spannkräfte übertragen sich in radialer Richtung auf eine in Figur 1 durch die Spannzange 20 verdeckte Schaftfläche des Werkzeugs 12.

Zur Erzeugung der genannten Spannkräfte ist eine Spannmutter 28 vorgesehen, welche mit dem Spannzangenfutter 14 verschraubt wird und in der an sich bekannter Weise an der Spannzange 20 anliegt und diese mit ihrer äußeren Mantelfläche 22 in Richtung auf den rückwärtigen Bereich 16 des Spannzangenfutters 14 drückt, sodass die äußere Mantelfläche 22 der Spannzange 20 und die Spannfläche 26 des Spannzangenfutters 14 miteinander verspannt werden.

Der Aufbau der Spannzange 20 wird nachfolgend unter Bezugnahme auf die Figuren 2 und 3 erläutert. Die Spannzange 20 erstreckt sich entlang einer Achse 30, welche bei eingesetztem Werkzeug 12 mit einer Werkzeugachse des Werkzeugs 12 identisch ist.

Der Spannzangenkörper 24 umfasst vorzugsweise drei regelmäßig über den Umfang der Spannzange 20 verteilt angeordnete Spannzangensegmente 32, 34 und 36. Die Spannzangensegmente 32, 34, 36 sind miteinander verbunden, jedoch relativ zueinander bewegbar. Zu diesem Zweck weist die Spannzange 20 eine Mehrzahl von nutförmigen Materialausnehmungen auf. Beispielsweise sind radial außen angeordnete Materialausnehmungen 38 vorgesehen, welche sich ausgehend von der äußeren Mantelfläche 22 nach radial innen bis zu einer Begrenzung 40 erstrecken. Alternativ und insbesondere zusätzlich hierzu sind Materialausnehmungen 42 vorgesehen, welche sich von einer inneren Mantelfläche 44 des Spannzangenkörpers 24 nach radial außen bis hin zu einer Begrenzung 46 erstrecken.

Die innere Mantelfläche 44 bildet die Begrenzung einer sich entlang der Achse 30 erstreckenden Werkzeugaufnahme 48.

Die Materialausnehmungen 38 und 42 erstrecken sich vorzugsweise entlang der gesamten Länge der Spannzange 20, also entlang der Achse 30 zwischen einer Vorderseite 50 und einer Rückseite 52 (vgl. Figur 1). Ferner ist es bevorzugt, dass die Materialausnehmungen 38 und 42 entlang ihres Verlaufs parallel zu der Achse 30 gesehen dasselbe Profil, also denselben Querschnitt aufweisen.

Für die Ausgestaltung des Querschnitts der Materialausnehmung ist es möglich, dass diese sich nach radial innen verengen; beispielsweise verengen sich die radial außen angeordneten Materialausnehmungen 38 von einer Breite 54 ausgehend auf eine Breite 56. Der Übergang zwischen unterschiedlichen Breiten 54 und 56 kann kontinuierlich, oder wie in Figur 3 dargestellt, stufenweise erfolgen.

Es ist möglich, dass die Begrenzung 40 der Materialausnehmung 38 eine der minimalen Breite der Materialausnehmung 38 entsprechende Breite aufweist. Es ist jedoch auch möglich, dass die Begrenzung 40 durch die Wandfläche eines Freiraums 58 gebildet ist. Dieser Freiraum erstreckt sich vorzugsweise entlang eines Umfangs um die Achse 30 oder, wie in Figur 3 dargestellt, tangential hierzu.

Der Freiraum 58 weist eine in radialer Richtung gemessene Tiefe 60 und eine senkrecht hierzu gemessene Breite 62 auf. Die Breite 62 ist vorzugsweise größer als die Tiefe 60.

Die Tiefe 60 entspricht beispielsweise der minimalen Breite 56 der Materialausnehmung 38.

Es ist möglich, dass eine Breite 64 einer radial innen angeordneten Materialausnehmung 42 der minimalen Breite 56 einer radial außen angeordneten Materialausnehmung 38 entspricht.

Optional ist für die Ausbildung der Begrenzung 46 der radial innen angeordneten Materialausnehmung 42 ebenfalls ein Freiraum 66 vorgesehen.

In radialer Richtung zwischen den Begrenzungen 40 und 46 miteinander fluchtender Materialausnehmungen 38 und 42 ist ein Materialabschnitt 68 vorgesehen, der relativ zueinander benachbarte Spannzangenkörpersegmente (beispielsweise die Segmente 34 und 36) miteinander verbindet. Der Materialabschnitt 68 weist eine in radialer Richtung gemessene Dicke 70 auf. Diese beträgt vorzugsweise zwischen ungefähr 0,4 mm und ungefähr 3 mm.

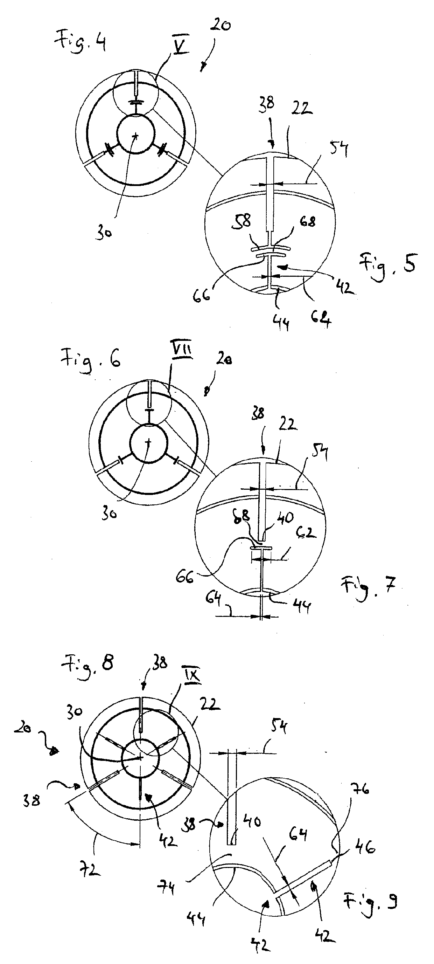

Unter Bezugnahme auf die Figuren 4 bis 9 werden im Folgenden weitere Ausführungsformen von Spannzangen 20 beschrieben. Die vorstehende Beschreibung zu der in den Figuren 1 und 2 dargestellten Spannzange 20 wird dabei in Bezug genommen.

Bei der Spannzange 20 gemäß Figuren 4 und 5 besteht die Besonderheit darin, dass zueinander benachbarte Freiräume 58 und 66 sich entlang eines Bogensegments erstrecken. Bevorzugt ist es, dass das Bogenmaß eines radial außen angeordneten Freiraums 58 größer ist als das Bogenmaß eines radial innen angeordneten Freiraums 66.

Bei der in den Figuren 6 und 7 dargestellten Spannzange besteht die Besonderheit darin, dass die Breite 54 einer radial außen angeordneten Materialausnehmung 38 in radialer Richtung gesehen über die gesamte Tiefe der Materialausnehmung 38 bis hin zu einer Begrenzung 40 identisch ist. Die Begrenzung 40 wird also durch den Nutboden der Materialausnehmung 38 gebildet. Ein Freiraum 58 ist nicht vorgesehen.

Bei den vorstehend beschriebenen Ausführungsformen von Spannzangen 20 sind radial außen angeordnete Materialausnehmungen 38 vorgesehen, welche jeweils mit radial innen angeordneten Materialausnehmungen 42 in Umfangsrichtung gesehen fluchten.

Nachfolgend wird unter Bezugnahme auf die Figuren 8 und 9 ein Ausführungsbeispiel einer Spannzange 20 beschrieben, bei welcher radial außen angeordnete Materialausnehmungen 38 und radial innen angeordnete Materialausnehmungen 42 in Umfangsrichtung gesehen relativ zueinander versetzt sind. Die Materialausnehmungen 38 und die Materialausnehmungen 42 sind jeweils untereinander und relativ zueinander regelmäßig versetzt, sodass beispielsweise jeweils eine radial außen angeordnete Materialausnehmung 38 und eine hierzu in Umfangsrichtung benachbarte radial innen angeordnete Materialausnehmung 42 in einem Winkel 72 von 60° voneinander beabstandet sind.

Die Materialausnehmungen 38 und 42 weisen jeweils Begrenzungen 40, 46 auf, deren Breite der jeweils durchgängigen Breite 54 bzw. 64 der Materialausnehmungen 38 bzw. 42 entspricht. Zwischen einer radial innen liegenden Begrenzung 40 einer radial außen angeordneten Materialausnehmung 38 und der inneren Mantelfläche 44 ist ein Materialabschnitt 74 vorgesehen, welcher zueinander benachbarte Spannzangenkörpersegmente miteinander verbindet. Ein entsprechender Verbindungsabschnitt 76 ist zwischen der radial außen angeordneten Begrenzung 46 der radial innen angeordneten Materialausnehmung 42 und der äußeren Mantelfläche 22 vorgesehen. Der Materialabschnitt 74 und 76 sind auf Höhe unterschiedlicher Kreise um die Achse 30 der Spannzange angeordnet.

Bei allen vorstehend unter Bezugnahme auf die Figuren 1 bis 7 beschriebenen Spannzangen 20 ist der Spannzangenkörper 24 so ausgestaltet, dass entlang eines umfangsseitig geschlossenen Wegs um die Achse 30 sämtliche durch Materialausnehmungen 38, 42 voneinander getrennte Spannzangenkörpersegmente 32, 34, 36 miteinander verbunden sind. Ein solcher Verbindungsweg ist bei den Ausführungsformen gemäß Figuren 1 bis 7 kreisförmig (und läuft durch die Materialabschnitte 68 hindurch). Bei der in den Figuren 8 und 9 dargestellten Ausführungsform verläuft der genannte Weg zwar auch umfangsseitig geschlossen, jedoch von einer Kreislinie abweichend entlang einer wellenförmigen Linie.

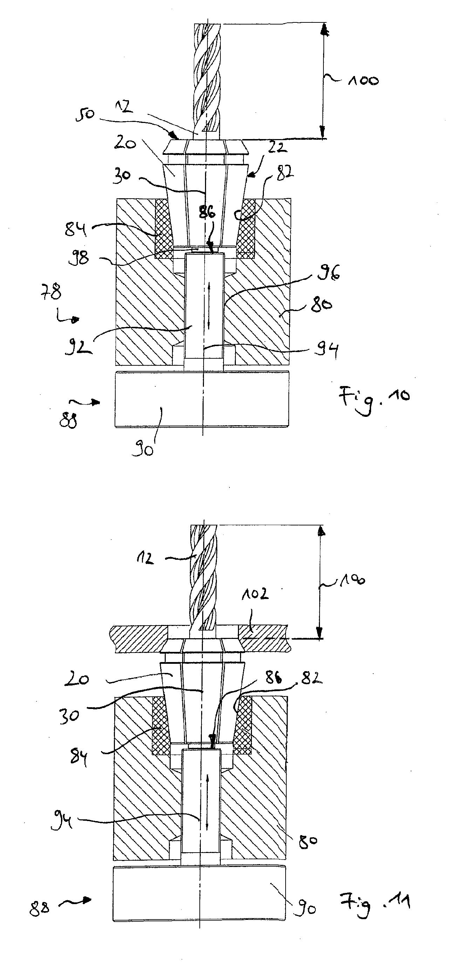

Unter Bezugnahme auf die Figuren 10 bis 12 wird nachfolgend die Montage eines Werkzeugs 12 an einem Werkzeughalter 10 beschrieben. Die Spannzange 20 eines solchen Werkzeughalters 10 kann beispielsweise eine der vorstehend unter Bezugnahme auf die Figuren 1 bis 9 beschriebene Ausgestaltung haben.

Für die Vormontage, bei welcher ein Werkzeug 12 mit einer Spannzange 20 gefügt wird, ist es möglich, eine Vormontageeinrichtung 78 zu verwenden. Diese weist einen Grundkörper 80 auf, welche an ihrem bezogen auf die Schwerkraftrichtung nach oben weisenden Ende eine vorzugsweise konische Aufnahmefläche 82 zur Aufnahme zumindest eines Abschnitts der äußeren Mantelfläche 22 einer Spannzange 20 aufweist. Die Aufnahmefläche 82 ist vorzugsweise reibungsminimiert und ist insbesondere mittels eines Kunststoffeinsatzes 84 gebildet. Dieser kann beispielsweise aus Polytetrafluorethylen (PTFE, bekannt unter der Handelsbezeichnung "Teflon") hergestellt sein.

Die Vormontageeinrichtung umfasst ferner eine Abstützfläche 86 zur Abstützung eines bezogen auf die Schwerkraftrichtung unteren Endes des Werkzeugs 12. Die Abstützfläche 86 kann integral mit dem Grundkörper 80 ausgebildet sein. Bevorzugt ist es jedoch, dass die Abstützfläche in zu der Achse 30 der Spannzange 20 paralleler Richtung lageeinstellbar ist. Zu diesem Zweck ist eine Längeneinstelleinrichtung 88 vorgesehen, welche beispielsweise einen Betätigungsabschnitt 90 und einen Einstellabschnitt 92 umfasst. Der Betätigungsabschnitt 90 treibt den Einstellabschnitt 92 an, welcher um eine Einstellachse 94 drehbar ist. Mittels eines Gewindes 96 wird eine Drehbewegung der Längeneinstelleinrichtung 88 in eine axiale Bewegung längs der Einstellachse 94 übersetzt, sodass die Höhe der Abstützfläche 86 relativ zu der Aufnahmefläche 82 einstellbar ist.

Zur Montage eines Werkzeugs 12 an einer Spannzange 20 wird zunächst die Spannzange 20 (noch ohne Werkzeug 12) mit der äußeren Mantelfläche 22 in die Aufnahmefläche 82 eingesetzt und die Abstützfläche 86 in einer vorläufigen (ungefähr passenden) Lage ausgerichtet. Anschließend wird die Werkzeugaufnahme 48 (vgl. Figur 2) der Spannzange 20 aufgeweitet, beispielsweise durch mechanisches Einwirken, insbesondere durch Wärmeeintrag, wobei dieser Wärmeeintrag auf maximal 100°C begrenzt sein kann. Anschließend wird eine Schaftfläche 98 des Werkzeugs 12 in die aufgeweitete Spannzange 20 eingeführt, bis das bezogen auf die Schwerkraftrichtung untere Ende des Werkzeugs 12 zur Auflage auf der Abstützfläche 86 kommt. Hierdurch ergibt sich eine vorläufige Auskraglänge 100, gemessen zwischen der Vorderseite 50 der Spannzange 20 und einem dem Schaft 98 abgewandten freien Ende des Werkzeugs 12. Zur Feineinstellung der Auskraglänge 100 kann die Längeneinstelleinrichtung 88 betätigt und die Lage der Abstützfläche 86 verändert werden. Der Veränderung der Lage der Abstützfläche 86 entsprechend vergrößert oder verkleinert sich die Auskraglänge 100.

Um sicherzustellen, dass sich im Zuge der Verstellung der Abstützfläche 86 nicht auch die Relativlage zwischen der Spannzange 20 und der Aufnahmefläche 82 verändert, kann ein Niederhalter 102 verwendet werden, welcher die Spannzange 20 in Richtung auf den Grundkörper 80 drückt, vgl. Figur 11.

Zum Abschluss der Montage erfolgt eine Rückformung der aufgeweiteten Werkzeugaufnahme 48, beispielsweise dadurch, dass nicht mehr mechanisch auf die Spannzange 20 eingewirkt wird, insbesondere jedoch durch Abkühlung der Spannzange 20.

Da die Werkzeugaufnahme 48 der Spannzange 20 nur ein geringfügiges Untermaß hat (bezogen auf die untere Toleranzgrenze des Werkzeugs 12 und bezogen auf einen erkalteten Zustand der Spannzange 20 und des Werkstücks 12 bei einer Temperatur von 20°C), gelangt durch die vorstehend beschriebene Rückformung der Spannzange 20 die innere Mantelfläche 44 lediglich in Anlage mit der Schaftfläche 98 des Werkzeugs 12, wodurch sichergestellt ist, dass das Werkzeug 12 nicht relativ zu der Spannzange 20 verrutschen kann, wenn die Spannzange 20 mit dem Werkzeug 12 von der Vormontageeinrichtung 78 entfernt wird. Dies ermöglicht es, mehrere vormontierte Einheiten, jeweils bestehend aus Spannzange 20 und Werkzeug 12, mit bereits exakt justierter Auskraglänge 100 zu lagern und bei Bedarf mit einem Spannzangenfutter 14 zu verbinden.

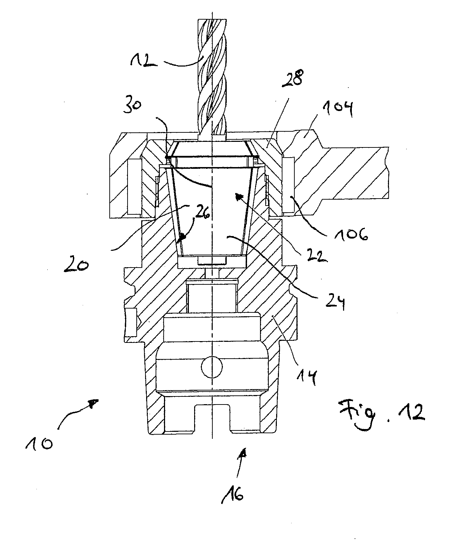

Eine Montage einer vormontierten Einheit aus Spannzange 20 und Werkzeug 12 an einem Spannzangenfutter 14 wird nachfolgend unter Bezugnahme auf Figur 12 beschrieben. Die Spannzange 20 mit dem verrutschgesicherten Werkzeug 12 wird mit der äußeren Mantelfläche 22 der Spannzange voraus in die konische Spannfläche 26 des Spannzangenfutters 14 eingesetzt. Anschließend wird die Spannmutter 28 auf das Spannzangenfutter 14 aufgeschraubt, welche ihrerseits in an sich bekannter Weise die Spannzange 20 in Richtung über das rückwärtige Ende 16 des Spannzangenfutters 14 drückt. Hierdurch übt die konische Spannfläche 26 nach radial innen gerichtete Spannkräfte auf den Spannzangenkörper 24 und dessen Spannzangenkörpersegmente 32, 34, 36 (vgl. Figur 2) aus. Auf diese Weise werden Spannkräfte erzeugt, welche das Spannzangenfutter 14 mit der Spannzange 20 und die Spannzange 20 mit dem Werkzeug 12 verspannen.

Zum Aufbringen der genannten Spannkräfte kann ein an sich bekannter Drehmomentschlüssel 104 verwendet werden. Dieser weist vorzugsweise zur Kontaktierung der Spannmutter 28 Rollen 106 auf.
Die im Zuge der Verschraubung der Spannmutter 28 mit dem Spannzangenfutter 14 auf das Werkzeug 12 ausgeübten Spannkräfte betragen ein Vielfaches der Anlagekräfte, welche durch Rückformung der Spannzange im Zuge des Fügens des Werkzeugs 12 mit der Spannzange 20 auf die Schaftfläche 98 des Werkzeugs 12 wirken. Bei der Vormontageeinheit aus Spannzange 20 und Werkzeug 12 beträgt ein Rutschmoment des Werkzeugs 12 um die Achse 30 relativ zu der Spannzange 20 beispielsweise maximal ungefähr 10 Nm. Ein solches Rutschmoment wäre zu niedrig, um ein Werkstück bearbeiten zu können. Eine Werkstückbearbeitung ist erst möglich, nachdem die Spannzange 20 wie vorstehend unter Bezugnahme auf Figur 12 beschrieben mit dem Werkzeug 12 verspannt wurde. Nach Verspannung des Werkzeugs 12 mit der Spannzange 20 beträgt ein Rutschmoment um die Achse 30 beispielsweise zwischen ungefähr 80 Nm und 300 Nm (beispielhafte Werte für Werkzeuge 12 mit einem Durchmesser von 10 mm bis 20 mm).

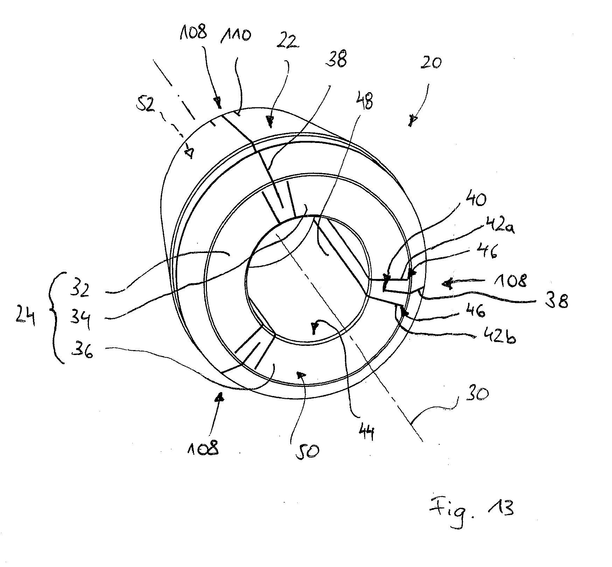

Eine bevorzugte Ausführungsform einer Spannzange 20 ist in Fig. 13 dargestellt. Die Spannzangensegmente 32, 34, 36 dieser Spannzange sind über Segmentverbindungsbereiche 108 miteinander verbunden. Die Spannzangensegmente 32, 34 und 36 erstrecken sich jeweils über einen Winkelbereich von beispielsweise 90° bis 110° und weisen keine Materialaussparungen 38, 40 auf. Diese sind vorzugsweise ausschließlich in den Segmentverbindungsbereichen 108 angeordnet, welche sich jeweils beispielsweise über einen Winkelbereich von 10° bis 30° erstrecken.

Innerhalb eines Segmentverbindungsbereichs 108 sind mehrere, insbesondere drei Materialaussparungen 38, 42 angeordnet. Vorzugsweise sind in jedem Segmentverbindungsbereich 108 zwei radial innen angeordnete Materialaussparungen 42a und 42b vorgesehen, zwischen denen eine radial außen angeordnete Materialaussparung 38 angeordnet ist.

Vorzugsweise sind die Materialaussparungen 38, 42a, 42b durch schlitzförmige Nuten gebildet, welche sich in zu der Spannzangenachse 30 radialen Ebenen erstrecken.

Die radial außen angeordneten Materialaussparungen 38 erstrecken sich über die gesamte Länge der Spannzange 20 zwischen der Vorderseite 50 und der Rückseite 52. Die Materialaussparungen 38 weisen ausgehend von der äußeren Mantelfläche 22 bis zu der Begrenzung 40 eine in radialer Richtung gemessene Eindringtiefe auf, welche vorzugsweise zwischen ungefähr 50 % und ungefähr 90 % der in radialer Richtung gemessenen Wandstärke der Spannzange 20 beträgt. Die radial innen angeordneten Materialaussparungen 42a, 42b erstrecken sich über die gesamte Länge der Spannzange 20 zwischen der Vorderseite 50 und der Rückseite 52. Die Materialaussparung weist ausgehend von der inneren Mantelfläche 44 bis zu der Begrenzung 46 eine in radialer Richtung gemessene Eindringtiefe auf, welche vorzugsweise zwischen ungefähr 50 % und ungefähr 90 % der in radialer Richtung gemessenen Wandstärke der Spannzange 20 beträgt. Bei einer bevorzugten Ausführungsform ist vorgesehen, dass die Materialaussparungen 42a, 42b in einem Teilbereich 110 die gesamte Wandstärke der Spannzange 20 durchsetzen. Der Teilbereich 110 grenzt insbesondere an die Rückseite 52 der Spannzange an und erstreckt sich in Richtung der zentralen Spannzangenachse 30 gesehen vorzugsweise über maximal 20 % der Länge der Spannzange 20.

## Patentansprüche

1. Werkzeughalter (10), mit einer mit einem Werkzeug (12) verspannbaren Spannzange (20), mit einem Spannzangenfutter (14) zur Verbindung mit einer Werkzeugmaschine, und mit einer Spannmutter (28) zur Verbindung der Spannzange (20) mit dem Spannzangenfutter (14), **dadurch gekennzeichnet, dass** in einem Spannzangenkörper (24) der Spannzange (20) nutförmige Materialausnehmungen (38, 42) vorgesehen sind, die sich in Längsrichtung des Spannzangenkörpers (24) und ausgehend von einer offenen Mantelfläche (22, 44) des Spannzangenkörpers (24) in radialer Richtung bis zu einer Begrenzung (40, 46) erstrecken.

2. Werkzeughalter nach Anspruch 1, **dadurch gekennzeichnet, dass** die Spannzange (20) eine Werkzeugaufnahme (48) aufweist, welche bei einer Temperatur von 20 Celsius bezogen auf eine untere Toleranzgrenze eines Werkzeugnennmaßes der Spannzange (20) ein Untermaß hat.

3. Werkzeughalter (10) nach Anspruch 2, **dadurch gekennzeichnet, dass** das Untermaß maximal 10 Mikrometer beträgt.

4. Werkzeughalter (10) nach einem der voranstehenden Ansprüche, **dadurch gekennzeichnet, dass** das Profil der nutförmigen Materialausnehmungen (38, 42) in Längsrichtung des Spannzangenkörpers (24) gesehen identisch ist.

5. Werkzeughalter (10) nach einem der voranstehenden Ansprüche, **dadurch gekennzeichnet, dass** sich die Materialausnehmungen (38) ausgehend von der offenen Mantelfläche (22) in radialer Richtung gesehen im Querschnitt verengen.

6. Werkzeughalter (10) nach einem der voranstehenden Ansprüche, **dadurch gekennzeichnet, dass** die Begrenzung einer Materialausnehmung (38, 42) durch die Wandfläche eines sich in Umfangsrichtung oder tangential zur Umfangsrichtung erstreckenden Freiraums (58, 66) gebildet ist.

7. Werkzeughalter (10) nach einem der voranstehenden Ansprüche, **dadurch gekennzeichnet, dass** radial außen angeordnete Materialausnehmungen (38) vorgesehen sind, die sich von einer äußeren Mantelfläche (22) des Spannzangenkörpers (24) bis zu einer radial innen liegenden Begrenzung (40) erstrecken.

8. Werkzeughalter (10) nach einem der voranstehenden Ansprüche, **dadurch gekennzeichnet, dass** radial innen angeordnete Materialausnehmungen (42) vorgesehen sind, die sich von einer inneren Mantelfläche (44) des Spannzangenkörpers (24) bis zu einer radial außen liegenden Begrenzung (46) erstrecken.

9. Werkzeughalter (10) nach Anspruch 8 bei Rückbezug auf Anspruch 7, **dadurch gekennzeichnet, dass** zumindest eine Teilmenge der radial außen angeordneten Materialausnehmungen (38) und der radial innen angeordneten Materialausnehmungen (42) in Umfangsrichtung gesehen miteinander fluchten.

10. Werkzeughalter (10) nach Anspruch 9 oder nach Anspruch 8 bei Rückbezug auf Anspruch 7, **dadurch gekennzeichnet, dass** zumindest eine Teilmenge der radial außen angeordneten Materialausnehmungen (38) und der radial innen angeordneten Materialausnehmungen (42) in Umfangsrichtung gesehen relativ zueinander versetzt sind.

11. Werkzeughalter nach Anspruch 1 oder nach einem der Ansprüche 4 bis 10, **dadurch gekennzeichnet, dass** die Spannzange (20) eine Werkzeugaufnahme (48) aufweist, welche bei einer Temperatur von 20 Celsius bezogen auf eine untere Toleranzgrenze eines Werkzeugnennmaßes der Spannzange (20) ein Übermaß hat.

12. Werkzeughalter nach einem der voranstehenden Ansprüche, **dadurch gekennzeichnet, dass** der Spannzangenkörper (24) Spannzangensegmente (32, 34, 36) aufweist, in welchen keine Materialausnehmungen (38, 42) vorgesehen sind, dass die Spannzangensegmente (32, 34, 36) über Segmentverbindungsbereiche (108) miteinander verbunden sind und dass die Materialausnehmungen (38, 42) in den Segmentverbindungsbereichen (108) angeordnet sind.

13. Werkzeughalter nach Anspruch 12, **dadurch gekennzeichnet, dass** in den Segmentverbindungsbereichen (108) in Umfangsrichtung alternierend radial innen angeordnete Materialausnehmungen (42) und radial außen angeordnete Materialausnehmungen (38) vorgesehen sind.

14. Werkzeughalter nach einem der voranstehenden Ansprüche, **dadurch gekennzeichnet, dass** radial innen angeordnete Materialausnehmungen (42) und radial außen angeordnete Materialausnehmungen (38) in Umfangsrichtung gesehen einander überlappend angeordnet sind.

15. Werkzeughalter nach Anspruch 13 oder 14, **dadurch gekennzeichnet, dass** in einem Segmentverbindungsbereich (108) genau drei Materialausnehmungen (38, 42) vorgesehen sind, wobei insbesondere eine radial außen angeordnete Materialausnehmung (38) in Umfangsrichtung gesehen zwischen zwei radial innen angeordneten Materialausnehmungen (42) vorgesehen ist.

16. Werkzeughalter nach einem der voranstehenden Ansprüche, **dadurch gekennzeichnet, dass** sich die Materialausnehmungen in Ebenen erstrecken, welche bezogen auf eine zentrale Spannzangenachse (30) der Spannzange (20) in radialer Richtung verlaufen.

17. Spannzange (20) für einen Werkzeughalter nach einem der voranstehenden Ansprüche.

18. Verfahren zum Einspannen eines Werkzeugs (12) in einem Werkzeughalter (10), insbesondere in einem Werkzeughalter (10) nach Anspruch 2 oder einem der Ansprüche 3 bis 10 oder 12 bis 16 bei Rückbezug auf Anspruch 2, umfassend das Bereitstellen einer Spannzange (20), das Aufweiten einer Werkzeugaufnahme (48) der Spannzange (20), das Anordnen eines Werkzeugs (12) in der Spannzange (20), die Rückformung der Spannzange (20), das Anordnen der Spannzange (20) mit Werkzeug (12) an einem Spannzangenfutter (14), das Verschrauben einer Spannmutter (28) mit dem Spannzangenfutter (14), **dadurch gekennzeichnet, dass** die Rückformung der Spannzange (20) mit einer Anlage einer inneren Mantelfläche (44) eines Spannzangenkörpers (24) an einer Schaftfläche (98) des Werkzeugs (12) einhergeht, bei der das Werkzeug (12) gegen eigengewichtbedingtes Verrutschen gesichert in der Spannzange (20) gehalten, jedoch noch nicht verspannt ist, dass das Verschrauben der Spannmutter (28) mit einer Verspannung der inneren Mantelfläche (44) des Spannzangenkörpers (24) mit der Schaftfläche (98) des Werkzeugs (12) einhergeht, und dass erst im Zuge der Verspannung der inneren Mantelfläche des Spannzangenkörpers (24) mit der Schaftfläche (98) des Werkzeugs (12) und nicht schon bereits im Zuge der Anlage der inneren Mantelfläche (44) des Spannzangenkörpers (24) an die Schaftfläche (98) des Werkzeugs (12) für eine Werkstückbearbeitung erforderliche Spannkräfte erzeugt werden.
